# FASCICULE DE BREVET EUROPEEN

(11) **EP 1 912 310 B1**
(45) Date de publication et mention de la délivrance du brevet: **09.02.2011**
(21) Numéro de dépôt: 07360045.4
(22) Date de dépôt: 05.10.2007
(51) Int. Cl.: H02K 5/22, H02K 7/116, H02K 11/00

(54) **Dispositif de transmission de couple moteur, d'adaptation de couples et de fixation, et utilisation d'un tel dispositif**
Vorrichtung zur Motordrehmomentübertragung, Drehmomentanpassung und Fixierung und Verwendung einer derartigen Vorrichtung
Arrangement for motor torque transmission, torque adaptation and fastening and method of using such an arrangement

(30) Priorité: 13.10.2006 FR 0609012
(43) Date de publication de la demande: 16.04.2008
(73) Titulaire: MANTION S.A., 25006 Besancon (FR)
(72) Inventeur: Schnoebelen, Denis, 25006 Besancon (FR)
(74) Mandataire: Munier, Laurent

(56) Documents cités:
- WO-A-01/77479
- WO-A-2004/077642
- DE-A1- 4 337 390
- DE-A1- 10 001 138
- DE-A1- 10 010 439
- DE-A1- 10 101 609
- DE-A1- 10 331 779
- DE-C1- 4 323 946
- US-A- 5 737 968
- US-A1- 2003 173 843

## Description

La présente invention s'inscrit dans le domaine de la mécanique et plus particulièrement dans le domaine des moyens de transmission de couple moteur adaptés par divers moyens mécaniques à l'application d'actionnement d'éléments mobiles.

En premier lieu, l'invention concerne un dispositif de transmission de moyens de transmission de couple moteur et d'adaptation de couples et de fixations.

L'homme du métier a conçu de multiples dispositifs mécaniques pour réduire ou amplifier des couples moteur d'entrée et obtenir un couple de sortie de transmission adapté à l'usage d'actionnement d'éléments mobiles tels que panneaux coulissants. La taille, le poids de ces panneaux, les courses d'actionnement, les frottements mécaniques sont autant de facteurs qui conditionnent le mode de réalisation de tels dispositifs réducteurs ou amplificateurs de couple d'entrée et/ou de sortie partant de vitesse et d'efforts d'actionnement desdits éléments mobiles.

L'évolution de l'art antérieur a permis de la sorte de concevoir des moto réducteurs et des boîtiers réducteurs ou amplificateurs indépendants des boîtiers moteurs.

De telles réalisations permettent à volonté de sélectionner le type de moteur tout comme le type de dispositifs de réduction et/ou d'amplification que nous appellerons par la suite réducteurs.

Cette liberté de sélection partant autorise des combinaisons qui permettent de motoriser tout ce qui peut ou doit être actionné. Ce ne sont pas les applications diverses et variées qui viennent à manquer.

A ce jour, à chacune de ces applications diverses et variées, correspond un moteur et un réducteur adaptés d'une part et d'autre part un moyen de solidarisation permanent ou non sur un support mobile ou fixe.

Dans un exemple d'application tel que volets coulissants, l'homme du métier a su combiner un moyen moteur avec un moyen de réduction / amplification avec un support fixe tel que mur d'un ouvrage de bâtiment ou un rail porteur fixé sur ledit mur.

Pour mettre en oeuvre de telles combinaisons, l'homme du métier a autant utilisé des moyens motoréducteurs que des moyens de solidarisation pour assembler un moteur et un réducteur à cet effet de combinaison.

A ce jour, les moteurs basse tension à courant continu sont à alimentation en 12 volts pour le moins. Ce sont des moteurs de qualité, chers et encombrants limités de par leur conception à chaque type d'application.

Il en va de même pour le nécessaire moyen de transmission du couple moteur à l'organe d'actionnement du volet. Il faut concevoir le réducteur adapté à chaque application. En effet, comme il a été énoncé déjà, la taille, le poids, la course des panneaux coulissants tels que volets entre autres facteurs tels que l'encombrement et la fixation dictés par la conception de l'ensemble panneaux ou système de volets coulissants motorisés, les variantes dans cette seul application sont diverses et variées.

L'homme du métier est confronté à devoir stocker des jeux de moteurs et de réducteurs pour répondre aux multiples cas de figures d'application. Il ne faut pas, en conséquence, oublier tous les moyens accessoires pour fixer entre autres et pour le moins le réducteur sur un support porteur tel que le rail ou le mur. Ces dits moyens accessoires ne sont non pas uniques mais variés, ce qui rend la construction d'un système de volets coulissants complexe pour l'assemblage d'une part et d'autre part rend ledit système fragile pour un fonctionnement sûr et durable.

Seul l'homme du métier peut définir, installer, mettre en route, assurer les maintenances préventives et curatives desdits systèmes. Ce n'est pas à la portée de tout public que d'acheter et pour le moins installer ledit système.

Le réducteur connu actuellement, qu'il soit partie du moteur ou accessoire solidarisable au moteur, comporte un boîtier dans lequel sont logées des roues dentées formant un engrenage actionné par l'axe d'un moteur, actionnant une poulie de transmission via l'axe de cette dernière. Ledit boîtier du réducteur comporte sur au moins une de ses parois, via une conformation particulière de cette paroi du boîtier, le ou les moyens de solidarisation sur un support rail ou mur.

Toujours via d'autres conformations dudit boîtier, sur une autre paroi, le boîtier comporte des moyens de fixation du moteur.

En conséquence de ce qui précède dans la description de l'art antérieur, les réducteurs sont aussi nombreux que les cas de figures d'applications et aussi nombreux que les contraintes de charges rencontrées.

Des systèmes de panneaux coulissants motorisés peuvent s'appliquer dans cet exemple autant à des volets qu'à d'autres types d'ouvrants tels que fenêtres ou portes coulissantes. Les encadrements d'ouvrages tels que fenêtres ou portes ne permettent pas l'utilisation d'un système unique et souvent il faut refaire une nouvelle combinaison d'un réducteur sur un moteur, adapté par exemple à une application « « portes coulissantes ». Les embrasures n'étant pas les mêmes, il faut adopter un moyen différent pour pouvoir loger l'encombrant volume de la motorisation.

Les réducteurs connus sont bruyants ; c'est une contrainte aujourd'hui acceptée car l'état de la technique n'a pas encore apporté de solution améliorant l'acoustique.

Un dispositif est connu par le document WO 01/77479A qui comprend les éléments suivants, un boîtier solidarisé à un support fixe, le boîtier (2) comportant deux coques, une poulie de transmission du couple de sortie audit panneau, la poulie étant solidaire du boîtier, lequel contient un engrenage actionné par un moteur générateur de couple d'entrée.

L'objectif de l'invention est de concevoir et réaliser un dispositif de moyens de transmission de couple moteur et d'adaptation de couple et de fixations ne négligeant aucune des performances de rendement, résistance et endurance connues, de sorte que ledit réducteur soit un standard unique pour répondre à toutes les applications et charges demandées, nouvelles ou connues.

Le second objectif est de le rendre peu encombrant et de concevoir un boîtier avec une solution générique globale autant pour sa solidarisation à un support tel qu'à un rail et encore pour sa solidarisation à un moteur et à d'autres boîtiers accessoires.

Pour atteindre ces objectifs, selon l'invention, les coques du boîtier sont énantiomorphes par rapport à un plan horizontal, longitudinal, transversal médian du boîtier, chaque coque comportant sur sa paroi externe au moins deux alésages étagés, concentriques, centrés sur une lumière, réalisée dans le dernier niveau d'alésage pour former le siège du flasque du moteur et constituant des moyens de fixation, d'indexation et de positionnement solidarisant le moteur à l'une ou l'autre des parois externes des coques du boîtier ; lesdits moyens de fixation, d'indexation (28), de positionnement et les lumières étant respectivement énantiomorphes par rapport au plan horizontal longitudinal transversal médian et définissant deux emplacements permettant la réversibilité et l'interchangeabilité du moteur et d'un boîtier d'éléments accessoires pouvant prendre position sur l'emplacement laissé libre.

Le but de l'Invention, en concevant un réducteur standard, d'application universelle, peu bruyant et peu encombrant, permettant des moyens de fixation standardisables est de permettre son utilisation par tout un chacun dans une motorisation de panneaux coulissants. En concevant un standard de réducteur, le but est de, via un système d'engrenage modulaire et du fixation du moteur, réduire le nombre de moteurs, d'autoriser l'utilisation de moteur en alimentation basse tension en innovant dans cette gamme de moteurs avec ceux d'alimentation en 6 volts à courant continu.

Un autre but de l'invention est de permettre d'inverser un même moteur par rapport au dispositif de transmission selon les besoins de l'application pour portes et fenêtres.

Sans être limité à ces seuls avantages, l'invention réduit le stock des moyens moteurs et permet d'utiliser le moteur 6 volts.

Partant le fabricant de motorisation réduit les coûts de fabrication et les coûts de la motorisation. Ainsi conçue, l'invention autorise une combinaison très compacte unique d'un moteur réversible sur un boîtier réducteur dont la modularité du système d'engrenage permet tout un éventail d'applications connues et encore de réaliser des standards de fixation sur un support tel que rail ou mur. Tout public est donc en mesure de pouvoir sélectionner grâce à cette conception de réducteur une motorisation silencieuse de panneaux en ne se souciant que d'avoir à fixer et connecter ladite motorisation pour son alimentation.

L'invention a rendu le système de panneaux coulissants moins complexe et moins fragile pour l'utilisateur, l'installateur et partant permet de réduire l'appel en garantie et responsabilité du fabricant.

L'invention a encore pour objet l'utilisation d'un dispositif conforme à la description ci-dessus.

Un exemple non limitatif de mise en oeuvre de la présente invention va maintenant être décrit au regard des dessins annexés sur lesquels :
- La figure 1 représente un boîtier réducteur, vue d'ensemble en perspective et éclaté ;
- la figure 2 représente les moyens de fixation sur support, vue en perspective ;
- la figure 3 est une vue éclatée en perspective d'une application réversible portes /volets sur le boîtier de la Fig. 1.
   L'invention sera mieux comprise en se référant aux figures 1, 2 et 3.

Comme représenté dans les figures, l'invention conçoit et réalise un dispositif de moyens de transmission de couple moteur et d'adaptation 1 par réduction et/ou amplification des couples d'entrée et/ou de sortie, pour l'actionnement d'au moins un panneau coulissant, comprenant un boîtier ou carter 2 solidarisé à un support fixe (non représenté) par rapport à un rail de guidage du panneau, une poulie de transmission 3 du couple de sortie partant de transmission d'efforts audit panneau, la poulie 3 étant solidaire du boîtier 2, lequel contient un engrenage 4 actionné par un moteur 5 générateur de couple d'entrée

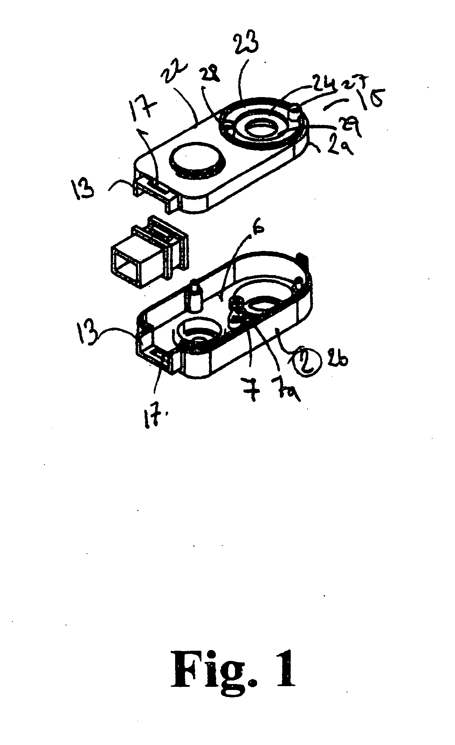

Selon la Fig. 1, le dispositif comporte le boîtier 2 comportant deux coques 2a, 2b, lesquelles ont tout ou partie des caractéristiques structurelles et fonctionnelles énantiomorphes par rapport au plan horizontal longitudinal transversal médian du boîtier pour permettre la réversibilité d'accessoires tels que moteur 5, boîtier de regroupement d'alimentations et de contrôle 26, de fixation 24.

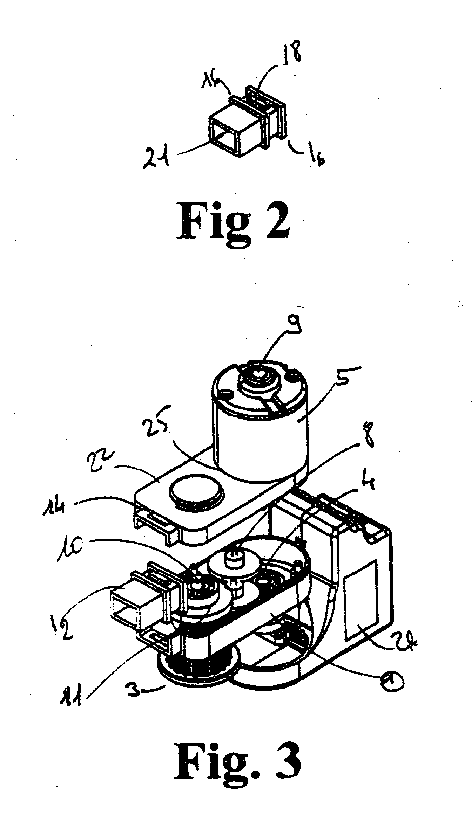

Selon les Fig. 1 et 3, l'invention résout la standardisation de son boîtier 2 en dotant la paroi interne des coques 2a et 2b de moyens 7 comportant des alésages cylindriques borgnes 7a de sorte que les pignons 8 d'engrenage puissent y être logés d'une part et d'autre part, s'il y a lieu, de pouvoir loger une combinaison de pignons entre le pignon de l'axe 9 moteur 5 et le pignon 10 de l'axe de poulie 3. Le boîtier 2 de l'invention autorise l'utilisation de roues dentées étagées 11 pour tout pignon 8, 9, 10 autorisant au choix la transmission indirecte par engrenages 4.

Lesdites transmissions de par cette conception directe ou indirecte peuvent être conçues à trains parallèles via les roues dentées étagées 11. L'endurance de ce boîtier universel est ainsi améliorée lorsque les critères de l'application sont plus sévères.

L'assemblage de ce boîtier 2 se fait en usine et reste inviolable et étanche pour garantir et sécuriser l'application pour lequel il est prévu.

Le dispositif de l'invention en suite de la description qui précède est caractérisé en ce que les parois internes 6 des coques 2a et 2b sont pourvues d'un ou plusieurs sièges 7 de pignon 8 de roues dentées uniques ou étagées 11 d'engrenage 4 permettant au choix le positionnement et l'interchangeabilité de pignons 8 retenus parmi un ensemble sélectionnable de combinaisons de roues dentées 11 rendant le boîtier universel, performant et endurant.

Le dispositif selon un autre mode de réalisation de l'invention comprend un siège unique 7 comportant plusieurs logements cylindriques et borgnes 7a aptes à réceptionner au moins un axe de pignon 8 intermédiaire entre les pignons 9 du moteur 5 et 10 de la poulie de transmission 3.

En permettant l'utilisation au choix de roues dentées à étage 11 ou de simples roues dentées, le dispositif de l'invention comprend un pignon moteur 9 actionnant selon le cas directement ou indirectement le pignon 10 de la poulie de renvoi 3, lesdites roues dentées étagées en prise directe ou non réalisant une transmission à train parallèle pour améliorer l'endurance et la fiabilité du réducteur 1.

Comme visible sur les Fig. 1 et 2, l'invention a conçu un standard de fixation du réducteur sur un support fixe. La Fig. 3 montre un tel dispositif de fixation 12 tel un nez de fixation 12 par rapport à l'ensemble réducteur 1 et rendu amovible entre des mâchoires 13 d'une ouverture 20 de la paroi avant 14 opposée à la paroi arrière arrondie 15 située du côté du logement du moteur 5 du boîtier 2.

Ces mâchoires 13 s'insèrent de manière ferme entre deux couronnes 16 à l'une des extrémités du nez 12. Cette fixation est sécurisée par un positionnement certain des mâchoires 13 entre les couronnes 16 par des moyens d'indexation 17 complémentaires des mâchoires 13 et des moyens d'indexation 18 situés en correspondance de ceux 17 du nez 12. Ces moyens 17 et 18 consolident également l'emprise du boîtier 2 sur le nez 12. Ainsi avec cette solution de fixation du nez 12, l'invention permet le choix et l'interchangeabilité dudit nez de fixation 12 parmi un ensemble de moyens de fixation propres à chaque support.

L'extrémité libre 19 du nez 12 peut être conçue configurée librement pour s'adapter au support fixe de l'application. Dans cet exemple de réalisation, sans y être tenu, c'est un parallélépipède creux pouvant s'insérer dans la section transversale de l'ouverture terminale d'un rail de guidage réalisant support fixe du réducteur 1. De longueur suffisante, cette extrémité libre 19 est insérée dans le profilé réalisant ainsi une fixation ferme et inamovible s'il y a lieu avbec des moyens complémentaires tels que pourvue de retenues en aile de requin de direction opposée au sens d'introduction..

Le nez de fixation 12 est creux, cette cavité 21 peut être traversante ou fermée. Il importe pour l'invention de pouvoir mettre à profit ce moyen de liaison, également siège de transmission de vibrations sonores, pour y loger ou fixer des matériaux absorbants acoustiques pour réduire des bruits de fonctionnement.

Les avantages qui découlent de cette conception sont la réduction de pièces de fixation, en ayant un moyen monobloc dissociable du boîtier réducteur 2 qui n'en devient que plus universel et standard.

Le dispositif de l'invention comprend un nez 12 de positionnement et de fixation du réducteur 1 à un support fixe, solidarisé amovible et interchangeable sur et dans la paroi avant 14 du boîtier 2.

Selon ce qui précède, le nez 12 est creux, fermé à l'une des extrémités 16 ou plein, comportant à son extrémité deux couronnes 16 formant un canal périmétrique comportant des moyens d'indexation 18 complémentaires aux moyens d'indexation 17 des mâchoires 13 pour réaliser une fixation ferme, forcée, résistante, durable, absorbante acoustique et pour le moins interchangeable, partant démontable.

En nous référant aux Fig. 1 et 3, le boîtier 2 du dispositif réducteur 1 comporte sur les parois externes 22 des coques 2a et 2b du boîtier 2 des configurations énantiomorphes 23 par rapport au plan longitudinal transversal médian du boîtier 2. Plus particulièrement, l'une ou l'autre de ces de ces conformations 23 a été conçue pour être un dispositif de fixation, de positionnement et d'indexation 24 d'au moins un élément moteur 5 dont le flasque inférieur 25 est conformé de manière inverse et symétrique au dispositif de fixation de positionnement, d'indexation 24. Ces moyens 24 du mode de réalisation retenu comprend les moyens de fixation 27 tels que des trous cylindriques borgnes filetés formant écrous, des moyens d'indexation tels que des plots cylindriques 28 et des moyens de positionnement 29 tels que des alésages concentriques étagés 29 centrés sur une lumière circulaire 30 réalisés dans les parois 2a et 2b du boîtier 2, ces moyens étant identiques sur chacune des parois 22 de 2a et 2b, le moteur 5 avec son flasque inférieur 25, peut prendre position et être fixé sur l'un quelconque des emplacements 24. L'un 24 de ces emplacements demeurant libre, il est possible d'équiper le réducteur 1 d'un second élément 26 accessoire comportant des moyens 25a identiques au flasque 25 du moteur 5. Cet accessoire 26 peut être, sans pour autant limiter l'invention, un boîtier de regroupement d'alimentations et de contrôle. Les moyens 25 et 25a permettent d'inverser les accessoires 26 et le moteur 5. Ce faisant, le réducteur devient la pièce essentielle et sensiblement centrale d'un ensemble de motorisation dont l'encombrement peut être modulé selon les circonstances de l'application, réalisant une simplification d'un ensemble de motorisation et une réduction des coûts de réalisation et de mise en oeuvre.

Le réducteur 1 est apte à être directement installé et utilisé par des non spécialistes. Ainsi conçu, le réducteur 1 réalise l'unique fixation d'un ensemble de motorisation.

Le dispositif selon l'invention est caractérisé en ce que les parois externes inférieure 2b et supérieure 2a comportent intégré un dispositif de fixation, de positionnement et d'indexation 24 d'au moins un élément moteur 5 et d'un boîtier accessoire de regroupement 26 d'alimentations et en particulier électronique de commandes et de gestion.

Le dispositif selon l'invention comporte des moyens de fixation 27 associés à des moyens d'indexation 28 et à des moyens de positionnement 29 formés d'au moins deux alésages étagés, concentriques, centrés sur une lumière 30, réalisés dans le dernier niveau d'alésage et dans les parois 2a et 2b pour former le siège du flasque 25 du moteur 5, le tout solidarisant le moteur 5 à l'une 2a ou l'autre 2b des parois du boîtier carter 2 tout en gardant la possibilité de réversibilité et d'interchangeabilité du moteur 5 et du boîtier 26.

Le dispositif comporte des moyens de fixation 27, les moyens d'indexation 28, les moyens de positionnement 29, la lumière 30 étant respectivement par rapport au plan longitudinal, transversal, médian, énantiomorphe, permettant la réversibilité entre des dispositifs moteur 5 et des boîtiers d'éléments accessoires 26, tout en conservant la réversibilité et l'interchangeabilité du moteur 5 et du boîtier 26.

Le dispositif comporte le boîtier carter 2 formant l'organe sensiblement central et support du moteur 5 et du boîtier de regroupement accessoire 26 de commande pour réaliser un standard de dispositif 1 unique.

Utilisation d'un dispositif conforme à l'une quelconque des réalisations précédentes avec un moteur 5 et/ou un boîtier accessoires 26 réversibles entre eux et chacun interchangeable pour former un ensemble de motorisation des volets coulissants.

Bien que l'invention ait été décrite en liaison avec des structures particulières, elle n'y est nullement limitée et on peut y apporter de nombreuses variantes.

Les combinaisons des différentes réalisations représentées sur les dessins ou décrites ci-dessus ne sortent pas du cadre de l'invention.

### Signes de référence

1. Dispositif de transmission / réducteur
2. boîtier carter 2
2a coque
2b coque
3. poulie de transmission
4. engrenage
5. moyen moteur
6. parois internes des coques du carter
7. siège du pignon d'engrenage
7a logement cylindrique borgne
8. pignon d'engrenage
9. axe moteur pignon
10. pignon axe de la poulie
11. roue dentée étagée
12. moyen de fixation / nez
13. mâchoires
14. paroi avant du boîtier carter
15. paroi arrière du boîtier carter
16. extrémité du dispositif de fixation / couronnes
17. moyens d'indexation des mâchoires
18. moyens d'indexation du dispositif de fixation
19. extrémité libre du nez
20. ouverture de la paroi avant du boîtier carter
21. cavité, creux du dispositif de fixation
22. parois externes du boîtier carter
23. configuration des parois externes et support de 5 et de 26
24. dispositif de fixation, positionnement et indexation / emplacement
25. flasque inférieur 25a. moyens de 26
26. Elément accessoire / boîtier de regroupement des alimentations et de contrôle
27. moyens de fixation
28. moyens d'indexation
29. moyens de positionnement
30. lumière

Les signes de référence insérés après les caractéristiques techniques mentionnées dans les revendications ont pour seul but de faciliter la compréhension de ces dernières et n'en limitent aucunement la portée.

## Revendications

1. Dispositif de transmission de couple moteur pour actionner un panneau coulissant comprenant un boîtier (2) solidarisé à un support fixe, le boîtier (2) comportant deux coques (2a, 2b), une poulie de transmission (3) du couple de sortie audit panneau, la poulie (3) étant solidaire du boîtier (2), lequel contient un engrenage (4) actionné par un moteur (5) générateur de couple d'entrée, **caractérisé en ce que** les coques (2a, 2b) du boîtier (2) sont énantiomorphes par rapport à un plan horizontal, longitudinal, transversal médian du boîtier (2), chaque coque (2a, 2b) comportant sur sa paroi externe (22) au moins deux alésages étagés, concentriques, centrés sur une lumière (30); réalisés dans le dernier niveau d'alésage pour former le siège du flasque (25) du moteur (5) et constituant des moyens de fixation (27), d'indexation (28) et de positionnement (29) solidarisant le moteur (5) à l'une ou l'autre des parois externes (22) des coques (2a, 2b) du boîtier (2) ; lesdits moyens de fixation (27), d'indexation (28), de positionnement (29) et les lumières (30) étant respectivement énantiomorphes par rapport au plan horizontal longitudinal transversal médian et définissent deux emplacements (24) permettant la réversibilité et l'interchangeabilité du moteur (5) et d'un boîtier (26) d'éléments accessoires prouvant prendre position sur l'emplacement laissé libre.

2. Dispositif selon la revendication précédente, **caractérisé en ce que** le boîtier (2) comporte deux coques (2a, 2b), lesquelles ont tout ou partie des caractéristiques structurelles et fonctionnelles énantiomorphes par rapport au plan horizontal longitudinal transversal médian du boîtier pour permettre la réversibilité d'accessoires tels que moteur (5), boîtier de regroupement d'alimentations, de contrôle (26) et de fixation (24).

3. Dispositif selon la revendication 1 ou 2, de moyens de transmission de couple moteur et d'adaptation (1) par réduction et/ou amplification des couple d'entrée et/ou de sortie, pour l'actionnement d'au moins un panneau coulissant comprenant le boîtier ou carter (2) solidarisé au support fixe par rapport à un rail de guidage du panneau, les parois externes inférieure (2b) et supérieure (2a) comportent intégré un dispositif de fixation, de positionnement et d'indexation (24) d'au moins un élément moteur (5) et d'un boîtier accessoire de regroupement (26) d'alimentations en particulier électronique de commandes et de gestion (26).

4. Dispositif selon l'une quelconque, des revendications précédentes, **caractérisé en ce que** le boîtier carter (2) forme l'organe sensiblement central et support du moteur (5) et du boîtier accessoire de regroupement (26) pour réaliser un standard de dispositif (1) unique.

5. Dispositif selon l'une quelconque des revendications précédentes, **caractérisé en ce que** les parois internes (6) des coques (2a et 2b) sont pourvues d'un ou plusieurs sièges (7) de pignon (8) de roues dentées uniques ou étagées (11) d'engrenage (4) permettant au choix le positionnement et l'interchangeabilité de pignons (8) retenus parmi un ensemble sélectionnable de combinaisons de roues dentées (11) rendant le boîtier universel, performant et endurant.

6. Dispositif selon la revendication 5 **caractérisé en ce qu'**il comprend un siège unique (7) comportant plusieurs logements cylindriques et borgnes (7a) aptes à réceptionner au moins un axe de pignon (8 intermédiaire entre les pignons (9) du moteur (5) et (10) de la poulie de transmission (3).

7. Dispositif selon la revendication 2 **caractérisé en ce qu'**il comprend un pignon moteur (9) actionnant selon le cas directement ou indirectement le pignon (10) de la poulie de renvoi (3), lesdites roues dentées étagées (11) en prise directe ou non réalisant une transmission à train parallèle pour améliorer l'endurance et la fiabilité du réducteur (1).

8. Dispositif selon la revendication 2, **caractérisé en ce qu'**il comprend un nez (12) de positionnement et de fixation du réducteur (1) à un support fixe, solidarisé amovible et interchangeable sur et dans la paroi avant (14) du boîtier (2).

9. Dispositif selon la revendication 2, **caractérisé en ce que** le nez (12) est creux, fermé à l'une des extrémités (16) ou plein, comportant à son extrémité deux couronnes (16) formant un canal périmétrique comportant des moyens d'indexation 18 complémentaires aux moyens d'indexation (17) des mâchoires (13) pour réaliser une fixation ferme, forcée, résistante, durable, absorbante acoustique et pour le moins interchangeable, partant démontable.

10. Utilisation d'un dispositif conforme à l'une quelconque des réalisations précédentes avec un moteur (5) et/ou un boîtier accessoires (26) réversibles entre eux et chacun interchangeable pour former un ensemble de motorisation des volets coulissants.

## Claims

1. Motor torque transmission device for operating a sliding panel comprising a box (2) fastened onto a fixed support, the box (2) consisting of two shells (2a, 2b), a pulley for transmitting (3) the output torque to the said panel, the pulley (3) being integral with the box (2), which contains a gear pair (4) operated by a motor (5) generating an input torque, and **characterised in that** the shells (2a, 2b) of box (2) are enantiomorphic in relation to a median sectional longitudinal horizontal plane of the box (2), each shell (2a, 2b) including in its outer wall (22), at least two concentric stepped bores, centred on an opening (30) made in the last level of the bore to former the seat of the end cover (25) of the motor (5) and constituting means of fastening (27), indexing (28) and positioning (29) fixing the motor (5) to one or the other of the outer walls (22) of the shells (2a, 2b) of the box (2); the said means of fastening (27), indexing (28), positioning (29) and the openings (30) which are respectively enantiomorphic in relation to the median, sectional longitudinal horizontal plane define two locations (24) allowing the reversibility and interchangeability of the motor (5) and a box (26) of accessory items which can be positioned on the location that is left free

2. Motor torque transmission device according to the preceding claim, **characterised in that** the box (2) consists of two shells (2a, 2b), which have all or a part of the enantiomorphic structural and functional characteristics in relation to the median sectional longitudinal horizontal plane of the box in order to enable the reversibility of the accessories such as a motor (5), a box grouping together the power supply, control (26) and fastening (24) components.

3. Motor torque transmission device according to claim 1 or 2, consisting of a means of transmitting motor torque and adapting it (1) by reduction and/or amplification of the input and/or output torques, to operate at least one sliding panel, including the box or casing (2) fastened onto the fixed support in relation to a panel guide rail, the lower (2b) and upper (2a) outer walls including an integrated fastening, positioning and indexing (24) device for at least one motor (5) component and a secondary box (26) grouping together the power supply and in particular the electronic control and management components (26).

4. Motor torque transmission device according to any one of the preceding claims, **characterised in that** the box (2) forms the substantially central component and supports the motor (5) and the power supply grouping box (26) to create a single standard device (1).

5. Motor torque transmission device according to any one of the preceding claims, **characterised in that** the inner walls (6) of the shells (2a and 2b) are provided with one or more seats (7) for pinions (8) with single or stepped gear wheels (11) for gear pairs (4) allowing a choice of positioning and the interchangeability of pinions (8) chosen from among a selectable set of combinations of gear wheels (11) rendering the box universal, efficient and long-lasting.

6. Motor torque transmission device according to claim 5 **characterised in that** it comprises a single seat (7) including several cylindrical, blind housings (7a) adapted to receive at least one pinion pin (8) intermediate between the pinions (9) of the motor (5) and that (10) of the transmission pulley (3).

7. Motor torque transmission device according to claim 2 **characterised in that** it comprises a motor pinion (9) operating, depending on the case, directly or indirectly the pinion (10) of the transmitter pulley (3), the said stepped gear wheels (11), coupled directly or not, effecting a parallel gear train transmission in order to improve the endurance and reliability of the reduction gear (1).

8. Motor torque transmission device according to claim 2, **characterised in that** it comprises a nose (12) for positioning and fastening the reduction gear (1) with one fixed support, integral, removable and interchangeable on and in the front wall (14) of the box (2).

9. Motor torque transmission device according to claim 2, **characterised in that** the nose (12) is hollow, closed at one of the ends (16) or solid, including at its ends two rings (16) forming a perimeter channel including indexing means 18 complementary to the indexing means (17) of the jaws (13) to achieve a firm, forced, strong, durable, acoustically absorbent fastening, and which is at least interchangeable, therefore removable.

10. Use of a Motor torque transmission device according to any of the preceding embodiments with a motor (5) and/or a secondary box (26) reversible with each other and each of them interchangeable to form a drive unit for sliding shutters.

## Patentansprüche

1. Vorrichtung zur Übertragung eines Antriebsdrehmoments zur Betätigung eines Schiebepaneels, das ein fest mit einem feststehenden Träger verbundenes Gehäuse (2) aufweist, wobei das Gehäuse (2) zwei Schalen (2a, 2b), eine Seil- bzw Riemenscheibe (3) zur Übertragung des Abtriebsmoments auf das Paneel aufweist und wobei die Seil- bzw. Riemenscheibe (3) fest mit dem Gehäuse (2) verbunden ist, welches ein von einem Motor (5) betätigtes Getriebe (4) enthält, der das Eingangsmoment erzeugt, **dadurch gekennzeichnet, dass** die Schalen (2a, 2b) des Gehäuses (2) spiegelbildlich bezüglich einer horizontalen, quer verlaufenden Mittellängsebene des Gehäuses (2) ausgebildet sind, wobei jede Schale (2a, 2b) an ihrer Außenwandung (22) mindestens zwei konzentrische abgestufte Bohrungen aufweist, die zu einem Spalt (30) zentriert sind, der in der letzten Stufe der Bohrung zur Bildung des Sitzes für den Flansch (25) des Motors (5) ausgebildet ist, und Befestigungsmittel (27), Indexierungsmittel (28) und Positionierungsmittel (29) bilden, welche den Motor (5) fest mit der einen oder der anderen der Außenwandungen (22) der Schalen (2a, 2b) des Gehäuses (2) verbinden, wobei die Befestigungsmittel (27), die Indexierungsmittel (28), die Positionierungsmittel (29) und die Spalte (30) jeweils spiegelbildlich zur horizontalen, quer verlaufenden Mittellängsebene verlaufen und zwei Montageplätze (24) definieren, welche die Umsteuerbarkeit und die Austauschbarkeit des Motors (5) und eines Gehäuses (26) für Zubehörteile gestatten, die auf dem frei gelassenen Montageplatz angeordnet werden können.

2. Vorrichtung nach dem vorhergehenden Anspruch, **dadurch gekennzeichnet, dass** das Gehäuse (2) zwei Schalen (2a, 2b) aufweist, die insgesamt oder teilweise auf den Aufbau bezogene und funktionsbezogene Eigenschaften aufweisen, die spiegelbildlich zur horizontalen, quer verlaufenden Mittellängsebene des Gehäuses sind, um so die Umsteuerbarkeit von Zubehörteilen wie des Motors (5), des Gruppiergehäuses für die Stromversorgung, zur Steuerung (26) und zur Befestigung (24) zu ermöglichen

3. Vorrichtung nach Anspruch 1 oder 2, mit Einrichtungen zur Übertragung eines Antriebsmoments und zur Anpassung (1) unter Untersetzung und/oder Übersetzung von Antriebs- und/oder Abtriebsmomenten, zur Betätigung von mindestens einem Schiebepaneel, welche das fest mit dem bezüglich einer Führungsschiene für das Paneel feststehenden Träger verbundene Gehäuse bzw. Kasten (2) aufweist, **dadurch gekennzeichnet, dass** die unteren (2b) und oberen (2a) Außenwandungen eine in darin integrierte Vorrichtung zur Befestigung, zur Positionierung und zur Indexierung (24) von mindestens einem Antriebsteil (5) und eines Gruppiergehäuses (26) für Versorgungsleitungen, insbesondere Leitungen für die elektronische Steuerung und den Betrieb (26), aufweisen.

4. Vorrichtung nach einem der vorhergehenden Ansprüche, **dadurch gekennzeichnet, dass** der Gehäusekasten (2) das im Wesentliche zentrale Gerät und den Träger für den Motor (5) und das Gruppiergehäuse (26) zur Realisierung eines einzigen Standards für die Vorrichtung (1) darstellt.

5. Vorrichtung nach einem der vorhergehenden Ansprüche, **dadurch gekennzeichnet, dass** die Innenwandungen (6) der Schalen (2a und 2b) mit einem Sitz oder mehreren Sitzen (7) für das Ritzel (8) von einzelnen oder abgestuften Zahnrädern (11) des Getriebes (4) versehen sind, welche nach Wahl die Positionierung und Austauschbarkeit von Ritzeln (8) gestatten, welche in einem in der Kombination von Zahnrädern (11) auswählbaren Verbund (11) gehalten werden, der das Gehäuse universell, leistungsfähig und lange Zeit haltbar macht.

6. Vorrichtung nach Anspruch 5, **dadurch gekennzeichnet, dass** sie einen einzigen Sitz (7) aufweist, der mehrere zylindrische Blindaufnahmen (7a) aufweist, die zur Aufnahme von mindestens einer Achse des Ritzels (8) zwischen den Ritzeln (9) des Motors (5) und (10) der Seil- bzw. Riemenscheibe (3) ausgelegt sind.

7. Vorrichtung nach Anspruch 2, **dadurch gekennzeichnet, dass** sie ein Antriebsritzel (9) aufweist, das je nach Fall direkt oder indirekt das Ritzel (10) der Umlenkwalze (3) betätigt, wobei die abgestuften Zahnräder (11), die in direktem Eingriff stehen oder nicht, eine Übertragung entlang eines parallelen Übertragungswegs zur Verbesserung der Langlebigkeit und Zuverlässigkeit der Untersetzungsvorrichtung (1) vornehmen.

8. Vorrichtung nach Anspruch 2, **dadurch gekennzeichnet, dass** sie einen Zapfen (12) zur Positionierung und Befestigung der Untersetzungsvorrichtung (1) an einem feststehenden Träger aufweist, der abnehmbar und austauschbar auf und in der vorderen Wandung (14) des Gehäuses (2) einstückig ausgebildet ist.

9. Vorrichtung nach Anspruch 2, **dadurch gekennzeichnet, dass** der Zapfen (12) hohl und an einem seiner Enden (16) geschlossen oder massiv ist und an seinem Ende zwei Kronen (16) trägt, die einen auf dem Umfang verlaufenden Kanal bilden, welcher Einrichtungen zur Indexierung (18) aufweist, die komplementär zu den Einrichtungen zur Indexierung (17) an Klemmbacken (13) sind, um eine enge, zwangsläufige, widerstandsfähige, dauerhafte, geräuschmindernde und zumindest austauschfähige und abnehmbare Befestigung zu realisieren,

10. Verwendung einer Vorrichtung nach einer der vorhergehenden Ausbildungen mit einem Motor (5) und/oder einem Zusatzgehäuse (26), die untereinander reversierbar und jeweils austauschbar sind, zur Bildung eines Verbunds für den motorischen Antrieb von Schiebepaneelen.
